# EUROPEAN PATENT SPECIFICATION

(11) **EP 1 452 730 B1**
(45) Date of publication and mention of the grant of the patent: **07.12.2011**
(21) Application number: 02788627.4
(22) Date of filing: 20.11.2002
(51) Int. Cl.: F02P 5/10, F02P 5/15

(54) **IGNITION TIMING CONTROL DEVICE FOR INTERNAL COMBUSTION ENGINE**
ZÜNDZEITPUNKTSTEUERVORRICHTUNG FÜR EINEN VERBRENNUNGSMOTOR
DISPOSITIF DE REGLAGE DE LA SYNCHRONISATION DE L'ALLUMAGE POUR MOTEUR A COMBUSTION INTERNE

(30) Priority: 06.12.2001 JP 2001372462
(43) Date of publication of application: 01.09.2004
(73) Proprietor: HONDA GIKEN KOGYO KABUSHIKI KAISHA, Minato-ku, Tokyo 107-8556 (JP)
(72) Inventor: Saitou, Norio c/o Kabushiki Kaisha Honda Gijutsu Kenkyusho, Wako-shi, Saitama 351-0193 (JP); Masuda, Shoji c/o Kabushiki Kaisha Honda Gijutsu Kenkyusho, Wako-shi, Saitama 351-0193 (JP); Ueda, Minoru c/o Kabushiki Kaisha Honda Gijutsu Kenkyusho, Wako-shi, Saitama 351-0193 (JP); Watanabe, Hisashi c/o Kakuda R&D Center, Keihin Corp., Kakuda-shi,Miyagi 981-1505 (JP); Nakadaira, Akira c/o Kakuda R&D Center, Keihin Corp., Kakuda-shi, Miyagi 981-1505 (JP); Shishido, Yoshikuni c/o Kakuda R&D Center, Keihin Corp., Kakuda-shi, Miyagi 981-1505 (JP)
(74) Representative: Herzog, Markus
(86) International application number: PCT/JP2002/012117
(87) International publication number: WO 2003/048565

(56) References cited:
- EP-A2- 0 393 974
- JP-A- 6 137 241
- JP-A- 57 068 558
- JP-A- 57 068 558
- JP-A- 61 004 865
- JP-A- 61 038 164
- JP-A- 63 314 368
- JP-A- 63 314 368
- US-A- 5 582 149

## Description

### TECHNICAL FIELD

The present invention relates to an ignition controller for an internal combustion engine provided with a sliding-throttle carburetor and, more specifically, to an ignition controller that controls ignition timing on the basis of a predetermined ignition timing characteristic according to the position of a sliding throttle valve determined by a throttle-position sensor.

### BACKGROUND ART

An ignition controller of this type is disclosed in JP6-137241A. This prior art ignition controller controls ignition timing using throttle position determined by a throttle-position sensing means as a parameter. The throttle-position sensing means includes a permanent magnet attached to the upper end of the slide valve of a carburetor, and a sensing unit provided with four magnetic sensors arranged in the sliding direction of the slide valve opposite to the slide valve on the main body of the carburetor. The construction of this throttle-position sensing means is simpler and smaller than those of a throttle-position sensing means that converts a throttle-operating quantity into a rotational quantity of a rotational mechanism disposed between the throttle piston and the slide valve, and determines the rotational quantity.

The throttle-position sensing means of the prior art ignition controller determines a plurality of throttle positions of the slide valve (sliding throttle valve) between a full-closed throttle position and a full-open throttle position and ignition timing control is performed on the basis of ignition-timing curves (ignition timing characteristics) respectively corresponding to the plurality of throttle positions. However, the prior art ignition controller needs to determine the plurality of throttle positions, needs the plurality of ignition timing curves respectively corresponding to the plurality of throttle positions and hence needs to perform complicated control operations.

The prior art needs a special magnetic sensor of special construction and shape specific to a carburetor to incorporate the throttle-position sensing means into the carburetor, which increases the cost of the ignition controller. Moreover, the component parts of the carburetor must be formed of special materials; for example, parts around the permanent magnet must be formed of nonmagnetic materials. Therefore, many conventional component parts must be replaced with other parts to incorporate the throttle-position sensing means into the carburetor, which makes the reduction of the cost of the ignition controller. The magnetic sensors must be disposed close to the permanent magnet to achieve accurate throttle-position determination, which reduces the degree of freedom of arrangement of the magnetic sensors.

The present invention has been made in view of the foregoing circumstances on the basis of a fact that the acceptable specific performance of an internal combustion engine, such as fuel consumption, can be ensured when ignition timing is controlled with a view to improve the specific performance by using a single ignition timing characteristic representing a plurality of ignition timing characteristics. It is a principal object of the present invention to provide an inexpensive ignition controller for an internal combustion engine, provided with an inexpensive throttle-position sensor of simple construction capable of ensuring the specific performance of the internal combustion engine.

JP 06 137241 A discloses a known ignition controller for a slide-valve type carburetor in accordance with the preamble of claim 1. JP 63 314368 A discloses the use of two different characteristics for the ignition control but does not disclose a slide-valve type carburetor using a linearly movable sliding throttle valve as used in the present invention. Thus carburetor has a swingable main throttle valve 32 and a swingable sub-throttle valve 27 in the intake passage 20 and does not have a linearly slidable throttle valve.

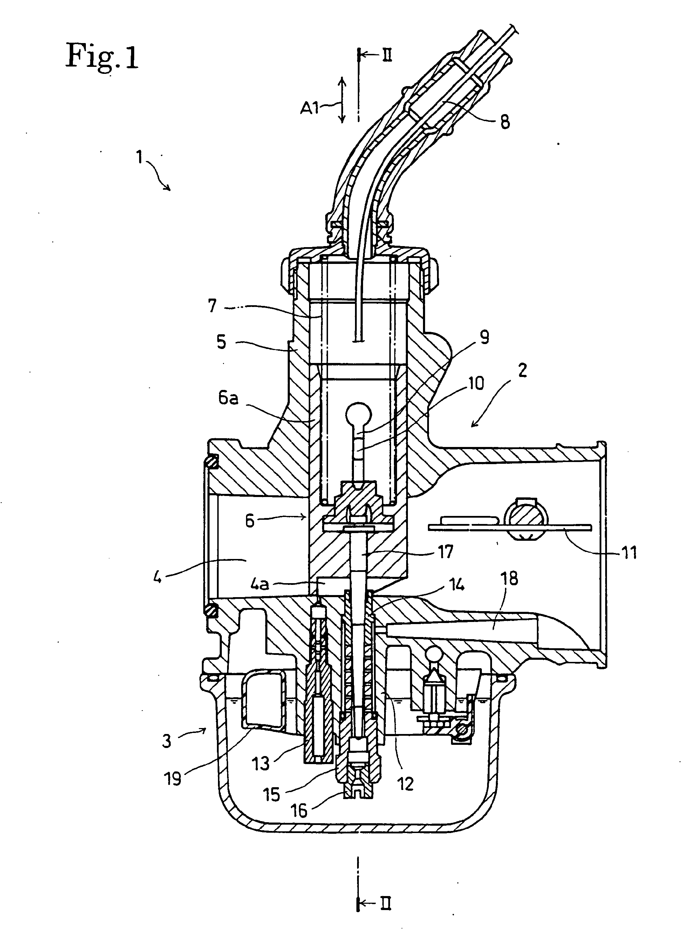

DE A2-0 393 974 shows a pedal mechanism having an accelerator foot pedal 80. When the foot pedal 80 is depressed, a segment 75 is swung about a pivot shaft 70 via a pedal arm 78 and a pivot arm 72. The swinging movement of the segment 75 is transmitted through a cable 90 to another segment 52 which causes a spool 40 to turn about a spool shaft 42, which in turn rotates a potentiometer 60. As shown in FIG.1, the potentiometer 60 supplies signals to a computer 93 in accordance with the depression of the foot pedal 80. A cam 48 is formed on the periphery of the spool 40 and is turned with the spool 40. A microswitch 84 is mounted on a support structure 4 and has an operating lever 86 aligned for engagement with the cam 48. When the spool 40 and the potentiometer 60 are in the home position or idle mode, the lever 86 will have actuated the microswitch so as to provide an idle mode confirmation signal to the computer 93 by a connecting line 94.

### DISCLOSURE OF THE INVENTION

According to the present invention, an ignition controller for an internal combustion engine is provided with a slide-valve type carburetor in accordance with claim 1.

The carburetor includes a main body defining an intake passage and having a throttle guide cylinder, and a sliding throttle valve fitted in the throttle guide cylinder so as to slide across the intake passage in the throttle guide cylinder and directly connected to an acceleration control wire comprises; a throttle-position sensor for determining the position of the sliding throttle valve; and a control means that controls ignition timing on the basis of throttle position according to a predetermined ignition timing characteristic; wherein the ignition timing characteristic consists of first and second characteristics, the throttle-position sensor generates a specific signal when throttle position is on one side of a predetermined single boundary throttle position in a throttle-position range between a full-open throttle position and a full-closed throttle position, the control means controls ignition timing on the basis of the first or the second characteristic depending on whether or not the specific signal is given.

The throttle-position sensor determines the single throttle position in the throttle-position range between the full-open throttle position and the full-closed throttle position and generates the specific signal when the throttle position is on one side of the predetermined single boundary throttle position. The control means controls ignition timing on the basis of the first characteristic for throttle positions in one throttle-position region on one side of the throttle-position range or on the basis of the second characteristic for throttle positions in the other throttle-position region on the other side of the throttle-position range depending on the specific signal.

Thus, the present invention has the following effects. The ignition timing characteristic consists of the first and the second characteristic, the throttle-position sensor generates a specific signal when throttle position is on one side of a predetermined single boundary throttle position in a throttle-position range between a full-open throttle position and a full-closed throttle position, and ignition timing is controlled on the basis of the first or the second characteristic depending on whether or not the specific signal is given. Therefore, the throttle-position sensor does not need to determine a plurality of positions of the sliding throttle valve. Consequently, the throttle-position sensor is simple in construction inexpensive and, therefore, the ignition controller is inexpensive and is capable of ensuring the specific performance of the internal combustion engine on the basis of the first or the second characteristic.

The throttle-position sensor includes a microswitch having a stationary contact, a movable contact, a movable member capable of connecting the stationary contact and the movable contact or disconnecting the movable contact from the stationary contact depending on the throttle position with respect to the predetermined boundary throttle position, and an operating member for operating the movable member according to the movement of the sliding throttle valve. Preferably, the movable member is a snap-action member.

When the sliding throttle valve is at the predetermined throttle position, the movable contact is connected to or disconnected from the stationary contact to close or open the microswitch. The throttle-position sensor generates the specific signal when the movable contact is brought into contact with the stationary contact.

Thus, the present invention provides the following effects. The throttle-position sensor provided with the inexpensive microswitch instead of a special sensor for determining the throttle position of the sliding throttle valve of the carburetor further reduces the cost of the ignition controller.

The throttle-position sensor is provided with a motion-transmitting rod disposed in contact with the sliding throttle valve to transmit the movement of the sliding throttle valve to the operating member.

The motion-transmitting rod transmits the movement of the sliding throttle valve to the operating member of the microswitch to operate the microswitch, which provides the following effects. Since the throttle-position sensor is provided with the motion-transmitting rod for transmitting the movement of the sliding throttle valve to the operating member, the microswitch does not need to be disposed close to the sliding throttle valve, which increases the freedom of determining the position of the microswitch.

The motion-transmitting rod may be attached to a central part of a diaphragm having a peripheral part attached to a case containing the motion-transmitting member.

Since the motion-transmitting rod supported for sliding in the case is attached to the central part of the diaphragm, the motion-transmitting rod can be stably supported, and the microswitch is isolated by the diaphragm from an atmosphere of, for example, fuel vapor in the throttle guide cylinder that may leak through a gap between the motion-transmitting member and the case.

The case may consist of a first case and a second case joined to the first case, the peripheral part of the diaphragm may be held between the first and the second case, the first case may be joined to the throttle guide cylinder, and the microswitch may be disposed on the side of the second case with respect to the diaphragm.

Thus, the motion-transmitting rod can be stably slidably supported on the first case, and thereby the accuracy of measurement is improved. Since the microswitch is disposed on the side of the second case with respect to the diaphragm, the microswitch is isolated from the fuel vapor by the diaphragm, and the durability of the microswitch is enhanced. Preferably, the first case is formed integrally with the throttle guide cylinder, which reduces the number of parts and assembling work and improves the facility of assembling the throttle-position sensor.

A cam is formed on the side wall of the sliding throttle valve. One end of the motion-transmitting rod is in contact with the cam to move the motion-transmitting rod according to the movement of the sliding throttle valve. Preferably, the cam includes a cam groove formed in the outer surface of the side wall of the sliding throttle valve in parallel to the length of the sliding throttle valve.

The movement of the sliding throttle valve is transmitted by the motion-transmitting member having the end in contact with the cam of the sliding throttle valve to the operating member of the microswitch, whereby the sliding throttle valve arrived at the predetermined throttle position is detected. The motion-transmitting rod can be moved according to the movement of the sliding throttle valve by incorporating a simple modification forming the cam in the sliding throttle valve into the carburetor. Therefore, the throttle-position sensor can be incorporated into a conventional carburetor merely by slightly modifying the sliding throttle valve of the conventional carburetor without changing materials forming the component parts of the carburetor, which is effective in reducing the cost of the ignition controller.

Typically, the first characteristic is designed to advance ignition timing more than the second characteristic does, when the throttle opening of the carburetor is not less than a predetermined throttle opening.

### BRIEF DESCRIPTION OF THE DRAWINGS

Fig. 1 is a sectional view, taken on the axis of an intake passage, of a slide-valve type carburetor to be installed on an internal combustion engine to which the ignition controller of the present invention is applied;
Fig. 2 is a sectional view taken on line II-II in Fig. 1;
Fig. 3 is a sectional view of a microswitch taken on line III-III in Fig. 2;
Fig. 4 is a block diagram of the ignition controller of the present invention; and
Fig. 5 is a graph showing the ignition timing characteristics of an ignition control map for the ignition controller.

### BEST MODE FOR CARRYING OUT THE INVENTION

A preferred embodiment of the present invention will be described in connection with Figs. 1 to 5.

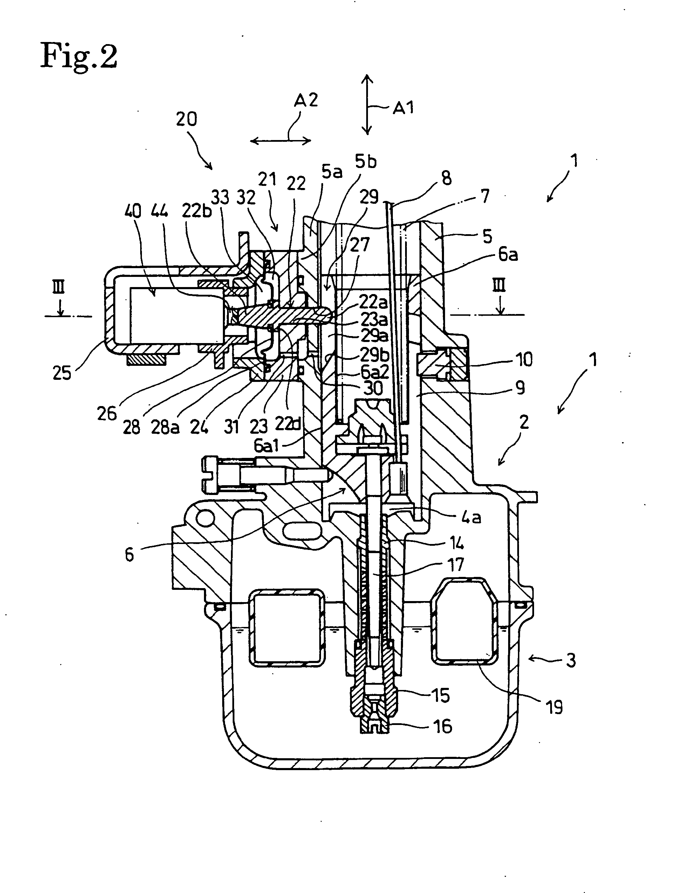

Referring to Figs. 1 and 2, an internal combustion engine to which an ignition controller of the present invention is applied is mounted on a motorcycle. The internal combustion engine is provided with a slide-valve type carburetor 1 having a carburetor body 2, and a float bowl 3 attached to the lower end of the carburetor body 2. An intake passage 4 is formed in the carburetor body 2. A sliding throttle valve 6 having the shape of a sliding piston is fitted in a throttle guide cylinder 5 so as to slide in opening and closing directions substantially perpendicular to the intake passage 4.

The sliding throttle valve 6 is pushed in a direction to close the intake passage 4 by a return spring 7. An acceleration control wire 8 has one end connected to a throttle grip, i.e., an acceleration control member, and the other end directly connected to the sliding throttle valve 6. As shown in Fig. 2, a straight guide groove 9 is formed in the cylindrical side wall 6a of the sliding throttle valve 6 in parallel to moving directions A1 of the sliding throttle valve 6. A guide member 10 engaged in the guide groove 9 restrains the sliding throttle valve 6 from turning about its axis. The guide member 10 is fitted in a hole formed in the throttle guide cylinder 5. A choke valve 11 is disposed in a part on the upstream side of the sliding throttle valve 6 of the intake passage 4.

The carburetor body 2 has a fuel-metering system forming part 12 projecting into the float bowl 3. The fuel-metering system forming part 12 is provided with a slow jet 13, and a needle jet 14 in which a jet needle 17 held on the bottom wall of the sliding throttle valve 6 is inserted. The needle jet 14 is fastened to the fuel-metering system forming part 12 with an air bleeder pipe 15 screwed in the fuel-metering system forming part 12. A main jet 16 is fixedly fitted in a lower end part of the air bleeder pipe 15. Bleed air is supplied through a bleed air passage 18 to a plurality of bleed holes formed in the air bleeder pipe 15..

The fuel level of the fuel contained in the float bowl 3 is kept at a fixed level by a float 19. The fuel contained in the float bowl 3 is sucked through the jets 13 and 16 into the intake passage 4 by a negative pressure produced in a venturi 4a formed in a region between the bottom wall of the sliding throttle valve 6 and a part corresponding to the sliding throttle valve 6 of a wall defining the intake passage 4 in the intake passage 4. The gap between the needle jet 14 and the jet needle 17 changes according to the movement of the sliding throttle valve 6. Thus, the fuel is fed into the venturi 4a at a feed rate proportional to throttle opening dependent on the throttle position of the sliding throttle valve 6.

The sliding throttle valve 6 moves across the intake passage 4 as the throttle grip is operated to change the passage area of the venturi 4a. The position of the sliding throttle valve 6 is controlled by operating the throttle grip so as to change in a range between a full-closed throttle position for a minimum throttle opening to set the venturi 4a in a minimum passage area for the idling operation of the internal combustion engine and a full-open throttle position for a maximum throttle opening to set the venturi 4a in a maximum passage area. Thus, the sliding throttle valve 6 controls the flow rate of air flowing through the intake passage 4 and the fuel feed rates at which the fuel is fed through the slow jet 13 and the needle jet 14 to control the output of the internal combustion engine.

Referring to Fig. 2, a throttle-position sensor 20 for determining the position of the sliding throttle valve 6 is attached to the outer surface of the side wall 5a of the throttle guide cylinder 5. The throttle-position sensor 20 includes a microswitch 40, and a motion-transmitting mechanism 21 for transmitting the movement of the sliding throttle valve 6 to the microswitch 40. The motion-transmitting mechanism 21 includes a sensing rod 22 set in contact with the sliding throttle valve 6, and a case assembly for containing the sensing rod 22, consisting of a first case 23 and a second case 24.

A bracket 25 is fastened together with the first case 23 and the second case 24 to the throttle guide cylinder 5 with a pair of bolts, not shown, screwed through the first case 23 and the second case 24 in threaded holes formed in the throttle guide cylinder 5. The microswitch 40 is disposed on the outer side of the case and is held fixedly on the bracket 25 fastened to the throttle guide cylinder 5. A connecting pipe 26 partly surrounding the sensing rod 22 has one end part in which one end part on the side of the second case 24 of the microswitch 40 is fitted and the other end part fitted in the second case 24. Thus, the connecting pipe 26 determines the position of the microswitch 40 relative to the second case 24.

The sensing rod 22 is inserted for sliding movement in a hole 27 formed in a mounting part 5a on which the first case 23 is mounted. The sensing rod 22 penetrates the throttle guide cylinder 5 in a direction parallel to a diameter of the sliding throttle valve 6. An inner end part 22a lying inside the throttle guide cylinder 5 of the sensing rod 22 is engaged in a cam groove 29 formed in the outer surface 6a1, i.e., a sliding surface, of the side wall 6a of the sliding throttle valve 6. The cam groove 29 extends along the length of the sliding throttle valve 6. A middle part of the sensing rod 22 is fastened to a central part of a diaphragm 28, and an outer end part 22b of the sensing rod 22 is in contact with an actuating rod 44 included in the microswitch 40. The diaphragm 28 has a peripheral part 28a fastened between the joining surfaces of the first case 23 and the second case 24.

The sensing rod 22 is supported in a hole 23a formed in the first case 23 for sliding in directions perpendicular to the cam groove 29, i.e., directions parallel to the diameter of the sliding throttle valve 6. The sensing rod 22 is biased by the resilience of the diaphragm 28 such that the inner end part 22a is able to come into contact with a transient part of the cam groove 29. A stopper flange 22d is in contact with the first case 23 to determine an innermost position of the sensing rod 22 relative to the throttle guide cylinder 5.

The first case 23 of the case assembly is joined through a sealing member to the mounting part 5b on the outer surface of the side wall 5a of the throttle guide cylinder 5. The first case 23 and the second case 24 are fastened to the throttle guide cylinder 5 with a pair of bolts, not shown, other than those fastening the bracket 25 to the throttle guide cylinder 5, extended through through holes formed in the first case 23 and the second case 24.

A small hole 31 is formed in the first case 23 so as to communicate with the interior of the throttle guide cylinder 5 by means of a small hole 30 formed in the cylindrical part 5. A slight negative pressure produced in the throttle guide cylinder 5 is applied to a pressure chamber 32 defined by the first case 23 and the diaphragm 28 through the small hole 31. Thus, force for advancing the sensing rod 22, i.e. , force that urges the sensing rod 22 toward the throttle guide cylinder 5, can be surely applied to the sensing rod 22 by the resilience of the diaphragm 28 and the pressure difference between the pressure chamber 32 and an atmospheric chamber 33 defined by the second case 24 and the diaphragm 28 and opening into the atmosphere.

The cam groove 29 has a slot 29a formed in a predetermined length so as to extended linearly in parallel to the moving directions A1 from the upper end of the side wall 6a of the sliding throttle valve 6 and opening in both the outer surface 6a1 and the inner surface 6a2 of the sliding throttle valve 6, and the transient part 29b having an inclined surface that engages with the sensing rod 22 and moves the same radially outward to retract the same from the slot 29a when the sliding throttle valve 6 is moved in a throttle-opening direction. The inner end part 22a of the sensing rod 22 is engaged in the slot 29a when the sensing rod 22 is located at the innermost position, and is in contact with the outer surface 6a1 when the sensing rod 22 is located at the outermost position.

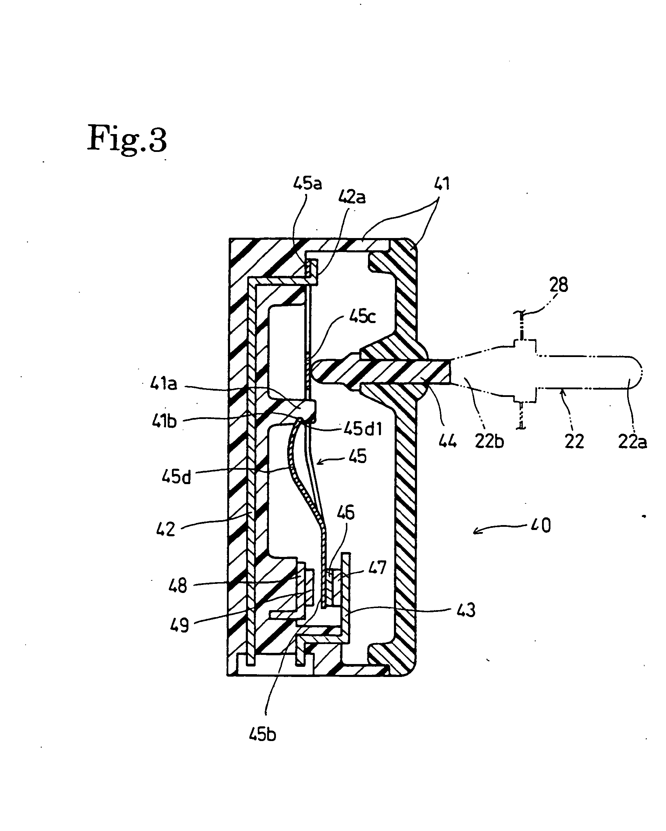

Referring to Fig. 3, the microswitch 40 is a normally closed switch including a synthetic resin housing 41, a first terminal 42 fixed to the housing 41, a second terminal 43 fixed to the housing 41, and an actuating rod 44, i.e., an operating member, in contact with the sensing rod 22. The actuating rod 44 is held for sliding in directions A2 (Fig. 2) in which the sensing rod 22 moves. Housed in the housing 41 are a switching plate 45 of a conductive metal having a first end 45a fixedly held in contact with one end 42a of the first terminal 42, a movable contact 46 attached to a second end 45b of the movable plate, , a stationary contact 47 attached to the first terminal 43, and a stopper 49 attached to a holding plate 48. The switching plate 45 has a contact part 45c in contact with the actuating rod 44. A switching spring 45d is formed integrally with the switching plate 45. An end part 45d1 of the switching spring 45d is engaged in a groove 41b formed in a projection 41a of the housing 41. The switching spring 45d makes the switching plate 45 move from one to the other position in a snap action.

When the sensing rod 22 is at the innermost position with the inner end part 22a engaged in the slot 29a of the cam groove 29, a throttle opening determined by the sliding throttle valve 6 is smaller than a predetermined throttle opening, the switching plate 45 of the microswitch 40 is at a position shown in Fig. 3, any external force is not acting on the actuating rod 44, and the second end 45b of the switching plate 45 is biased toward the stationary contact 47 by the resilience of the switching spring 45d to hold the movable contact 46 in contact with the stationary contact 47. Then, a current flows through the first terminal 42 and the second terminal 43, and the microswitch 40 provides an on-signal.

Referring to Figs. 2 and 3, when the sliding throttle valve 6 is moved from a throttle position corresponding to a state where the inner end part 22a of the sensing rod 22 is engaged in the slot 29a to increase throttle opening and the throttle opening is smaller than the predetermined throttle opening, a force acts radially outward on the sensing rod 22 to move the sensing rod 22 outward after the inner end part 22a of the sensing rod has come into contact with the transient part 29b of the cam groove 29. Thus, the movement of the sliding throttle valve 6 is transmitted through the sensing rod 22 to the actuating rod 44, the actuating rod 44 presses the contact part 45c to curve the action part 45c in a shape convex to the left as viewed in Fig. 3 from the position shown in Fig. 3. The sensing rod 22 serves as the action-transmitting member that transmits the movement of the sliding throttle valve 6 to the actuating rod 44.

Upon the increase of throttle opening dependent on the throttle position of the sliding throttle valve 6 to the predetermined throttle opening, the inner end part 22a of the sensing rod 22 moves from the transient part 29b to the outer surface 6a1 of the sliding throttle valve 6. Then, the contact part 45c of the switching plate 45 is moved to the left, as viewed in Fig. 3, beyond a predetermined position to cause the warp of the switching spring 45d to reverses instantly.

Consequently, the movable contact 46 is disconnected from the stationary contact 47, and the second end 45b of the switching plate 45 is pressed against the stopper 49. Thus, the current through the first terminal 42, and the second terminal 43 is intercepted, and the on-signal of the microswitch 40 is stopped. This state is maintained while the throttle opening dependent on the throttle position of the sliding throttle valve 6 is in the range of the predetermined throttle opening to the maximum throttle opening.

When the sliding throttle valve 6 is moved to decrease the throttle opening less than the predetermined throttle opening and the inner end part 22a of the sensing rod 22 moves via the inclined part 29b into the slot 29a, the pressure applied to the actuating rod 44 by the sensing rod 22 is removed, the switching plate 45 is pushed back by its own resilience toward the actuating rod 44, the warp of the switching spring 45d is caused to reverse instantly, so that the second end 45b f the switching plate 45 is urged toward the stationary contact 47 to press the movable contact 46 against the stationary contact 47 in a state shown in Fig. 3. Consequently, the microswitch 40 provides an on-signal. Thus, the throttle-position sensor provides the signal only while the sliding throttle valve 6 is at a throttle position corresponding to a throttle opening on one side of the predetermined throttle opening between the minimum throttle opening and the maximum throttle opening.

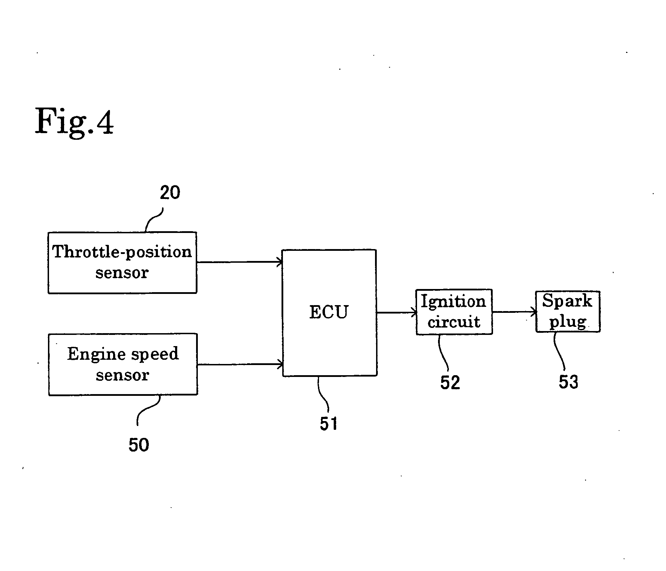

Referring to Fig. 4, the ignition controller includes the throttle-position sensor 20 for determining the throttle position of the sliding throttle valve 6 corresponding to the load on the internal combustion engine, an engine speed sensor 50 for determining engine speed, i.e., the rotating speed of the crankshaft of the internal combustion engine, an ECU 51, i.e., an electronic control means, that receives the output signals of those sensors 20 and 50, an ignition circuit 52 controlled by the ECU 51, and a spark plug 53 to which the ignition circuit 52 supplies current.

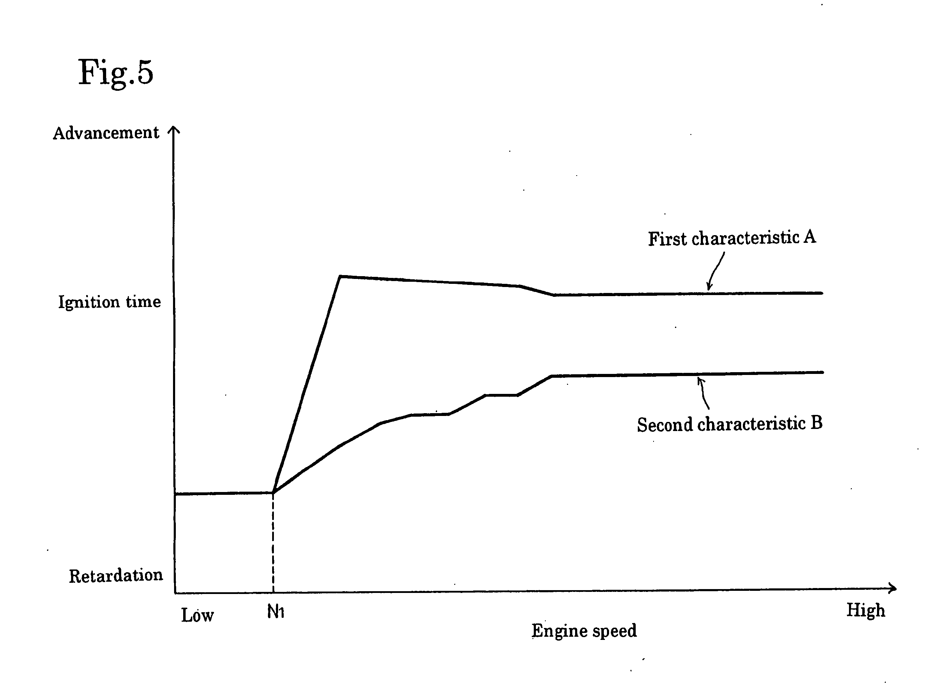

The ECU 51 is provided with a storage device storing an ignition control map. As shown in Fig. 5, the ignition control map includes two predetermined ignition timing characteristics, i.e., a first characteristic A and a second characteristic B, determined for the throttle position of the sliding throttle valve 6 as a parameter.

The ECU 51 controls power supply to the ignition circuit 52 so that spark occurs at the time specified by the first characteristic A or the second characteristic B. While throttle opening dependent on the throttle position of the sliding throttle valve 6 is less than the predetermined throttle opening, spark is provided according to the first characteristic A that attaches importance to fuel consumption. While throttle opening dependent on the throttle position of the sliding throttle valve 6 is not less than the predetermined throttle opening, spark is provided according to the second characteristic B that attaches importance to exhaust emission. The respective types of ignition timing according to the first characteristic A and the second characteristic B are the same for engine speeds in a low-speed range below a predetermined engine speed N₁. The characteristic A specifies ignition times earlier than those specified by the characteristic B in a speed range exceeding the predetermined engine speed N₁.

The predetermined throttle opening is, for example, is 40% of the maximum throttle opening of a throttle-opening range corresponding to a load range in which the internal engine operates frequently, such as a throttle opening corresponding to the full-open throttle position of the sliding throttle valve 6.

The operation and effect of the embodiment will be described hereafter.

The ignition timing characteristic has the first characteristic A and the second characteristic B. The throttle-position sensor 20 generates the on-signal when the throttle opening is less than the predetermined throttle opening corresponding to the predetermined boundary throttle position in the throttle-position range between the full-open throttle position and the full-closed throttle position, and does not generate any signal when the throttle position is not less than the predetermined throttle opening. The ECU 51 controls ignition timing on the basis of the ignition timing characteristic specified in the ignition control map; that is, the ECU 51 controls ignition timing according to the first characteristic A while the throttle opening is less than the predetermined throttle opening corresponding to the predetermined throttle position of the sliding throttle valve 6 or according to the second characteristic B while the throttle opening is not less than the present invention throttle opening.

Thus, the throttle-position sensor 20 does not determine a plurality of throttle positions of the sliding throttle valve 6. Therefore the throttle-position sensor 20 is simple in construction, can be manufactured at a low cost. Consequently, the ignition controller can be manufactured at a low cost and is capable of ensuring the specific abilities of the internal combustion engine by controlling ignition timing according to the first characteristic A or the second characteristic B.

The motorcycle equipped with the internal combustion engine is excellent in fuel economy because ignition timing is controlled according to the first characteristic A attaching importance to fuel consumption, and is satisfactory in exhaust emission characteristic because ignition timing for the internal combustion engine is controlled according to the second characteristic B attaching importance to exhaust emission while the throttle opening dependent on the throttle position of the sliding throttle valve 6 is not less than the predetermined throttle opening and the internal combustion engine requires a comparatively large amount of intake air and discharges an increased amount of exhaust gas.

The throttle-position sensor 20 is provided with the microswitch 40, the movable contact 46 of the microswitch 40 is brought into contact with or disconnected from the stationary contact 47 when the sliding throttle valve 6 is at the predetermined throttle position, and the throttle-position sensor 46 provides the on-signal when the movable contact 46 is brought into contact with the stationary contact 47. Therefore, the carburetor does not need to be provided with any special sensor for determining the throttle position of the sliding throttle valve 6 and the generally used, inexpensive microswitch 40 can be used, which further reduces the cost of the ignition controller.

Since the throttle-position sensor 20 is provided with the sensing rod 22 for transmitting the movement of the sliding throttle valve 6 to the actuating rod 44, the movement of the sliding throttle valve 6 is transmitted through the sensing rod 22 to the actuating rod 44 of the microswitch 40 to close or open the microswitch 40. Therefore, the microswitch 40 does not need to be disposed close to the sliding throttle valve 6, which increases the freedom of determining the position of the microswitch 40.

Since the sensing rod 22 supported for sliding on the first case 23 is attached to the central part of the diaphragm 28 having the peripheral part 28a held between the first case 23 and the second case 24 joined to the first case 23, the sensing rod 22 supported for sliding on the first case 23 and fixed to the central part of the diaphragm 28 can be stably supported, which improves the accuracy of sensing the movement of the sliding throttle valve 6. The force for advancing the sensing rod 22 toward the throttle guide cylinder 5 can be surely applied to the sensing rod 22 by the resilience of the diaphragm 28 and the pressure difference between the pressure chamber 32 to which a negative pressure is applied through the small hole 31, and the atmospheric chamber 33 while the throttle opening is less than the predetermined throttle opening corresponding to the predetermined throttle position of the sliding throttle valve 6, which enables accurate throttle opening determination.

Since the microswitch 40 is disposed on the side of the second case 24 with respect to the diaphragm 28, the microswitch 40 is isolated from the fuel vapor contained in the throttle guide cylinder 5 that may leak through the gap between the side wall of the hole 23a of the first case 23 and the sensing rod 22 that slides relative to the first case 23 by the diaphragm 28, which enhances the durability of the microswitch 40.

The cam groove 29a is formed in the side wall 6a of the sliding throttle valve 6, the inner end part 22a of the sensing rod 22 is engaged in the cam groove 29, the cam groove 29 controls the condition of contact between the sensing rod 22 and the sliding throttle valve 6, the sensing rod 22 moves according to the movement of the sliding throttle valve 6, and the movement of the sliding throttle valve 6 is transmitted through the sensing rod 22 having the inner end part 22a engaged in the cam groove 29 to the actuating rod 44 of the microswitch 40 to determine the throttle position of the sliding throttle valve 6. Thus, the sensing rod 22 can be moved according to the movement of the sliding throttle valve 6 by the cam groove 29 formed in the side wall 6a of the sliding throttle valve 6. Therefore the throttle-position sensor 20 can be formed by introducing a simple structural modification into the conventional sliding throttle valve without changing materials forming the component parts of the carburetor, which enables the reduction of the cost of the ignition controller.

Some modifications of the foregoing embodiment will be described.

Although the first case 23 and the throttle guide cylinder 5 of the embodiment are separate parts, the first case 23 may be formed integrally with the throttle guide cylinder 5, which reduces the number of parts and assembling work and facilitates assembling work for assembling the throttle-position sensor.

Although the throttle-position sensor 20 of the embodiment provides the on-signal, i.e., a specific signal, when the throttle opening is less than the predetermined throttle opening and does not provide any signal when the throttle opening is not less than the predetermined throttle opening, the throttle-position sensor 20 may provide the on-signal when the throttle opening is not less than the predetermined throttle opening and may provide no signal when the throttle opening is less than the predetermined throttle opening. Different signals may be provided for throttle openings less than the predetermined throttle opening and those not less than the predetermined throttle opening, respectively, and one of those different signals may be a specific signal.

Although the inner end part 22a of the sensing rod 22 comes into contact with the outer surface 6a1 of the side wall 6a of the sliding throttle valve 6 upon the arrival of the sliding throttle valve 6 at the predetermined throttle position corresponding to the predetermined throttle opening in the embodiment, the sliding throttle valve 6 may arrive at the predetermined throttle position corresponding to the predetermined throttle opening while the inner end part 22a is in contact with the transient part 29b, and the switching plate 45 may reverse its warping mode in a snap action.

## Claims

1. An ignition controller for an internal combustion engine provided with a slide-valve type carburetor (1) including a main body (2) defining an intake passage (4) and having a throttle guide cylinder (5) having a side wall (5a), and a sliding throttle valve (6) fitted in the throttle guide cylinder (5) so as to slide in the throttle guide cylinder (5) across the intake passage (4) and connected directly to an acceleration control wire (8), wherein said ignition controller comprises a throttle-position sensor (20) for detecting the throttle position of the sliding throttle valve (6), and a control means (51) that controls ignition timing on the basis of the detected throttle position according to a predetermined ignition timing characteristic;
**characterized in that**:
the ignition timing characteristic consists of first and second characteristics (A and B), the throttle-position sensor (20) is configured to generate a specific signal when throttle position is on one side of a predetermined boundary throttle position in a throttle-position range between a full-open throttle position and a full-closed throttle position;
the control means (51) is operative to control ignition timing on the basis of the first or the second characteristic (A or B) depending on whether or not the specific signal is given;
a cam (29) is formed on the side wall (6a) of the sliding throttle valve (6);
the throttle-position sensor (20) is attached to the outer surface of the side wall (5a) of the throttle guide cylinder (5) and includes a microswitch (40) having a movable member (45) which is moved to generate said specific signal;
the throttle-position sensor (20) further includes a motion-transmitting rod shaped element (22, 44) penetrating the throttle guide cylinder (5), said motion-transmitting rod shaped-element (22, 44) having one end in contact
with the cam (29) and the other end in contact with the movable member (45) in such a manner that the cam (29) controls the condition of contact of the motion-transmitting rod shaped element (22, 44) with the sliding throttle valve (6) so that the motion-transmitting rod shaped element (22, 44) moves the movable member (45) according to the movement of the sliding throttle valve (6).

2. The ignition controller for an internal combustion engine according to claim 1, wherein the microswitch (40) has a stationary contact (47), a movable contact (46), and the movable member (45) operable to connect the stationary contact (47) and the movable contact (46) or to disconnect the movable contact (46) from the stationary contact (47) depending on the throttle position with respect to the predetermined boundary throttle position.

3. The ignition controller for an internal combustion engine according to claim 1, wherein the movable member (45) is a snap-action member.

4. The ignition controller for an internal combustion engine according to claim 1, wherein the motion-transmitting rod shaped element (22, 44) is attached to a central part of a diaphragm (28) having a peripheral part thereof attached to a case (23, 24) containing the motion transmitting rod shaped element (22, 44).

5. The ignition controller for an internal combustion engine according to claim 4, wherein the case (23, 24) consists of a first case (23) and a second case (24) joined to the first case (23), the peripheral part of the diaphragm (28) is held between the first and the second cases (23, 24), the first case (23) is joined to the throttle guide cylinder (5), and the microswitch (40) is disposed on the side of the second case (24) with respect to the diaphragm (28).

6. The ignition controller for an internal combustion engine according to claim 5, wherein the first case (23) is formed integrally with the throttle guide cylinder (5).

7. The ignition controller according to claim 1,
wherein the cam (29) includes a cam groove (29) formed in the outer surface of the side wall (6a) of the sliding throttle valve (6) in parallel to the length of the sliding throttle valve (6).

8. The ignition controller for an internal combustion engine according to claim 1, wherein the first characteristic (A) is designed to advance ignition timing more than the second characteristic (B) does, when throttle opening of the carburetor (1) is not less than a predetermined throttle opening.

## Patentansprüche

1. Zündsteuervorrichtung für einen Verbrennungsmotor, der mit einem Schieberventilvergaser (1) versehen ist, der einen Hauptkörper (2), der einen Einlasskanal (4) definiert und einen Drosselführungszylinder (5) mit einer Seitenwand (5a) aufweist, und ein Schieberdrosselventil (6), das in den Drosselführungszylinder (5) eingesetzt ist, sodass es sich in dem Drosselführungszylinder (5) quer zu dem Einlasskanal (4) verschiebt und direkt mit einem Gassteuerdraht (8) verbunden ist, enthält, worin die Zündsteuervorrichtung einen Drosselstellungssensor (20) zum Erfassen der Drosselstellung des Schieberdrosselventils (6) sowie ein Steuermittel (51), das die Zündzeit auf der Basis der erfassten Drosselstellung gemäß einer vorbestimmten Zündzeitcharakteristik steuert, aufweist;
**dadurch gekennzeichnet, dass**:
die Zündzeitcharakteristik aus ersten und zweiten Charakteristiken (A und B) besteht, wobei der Drosselstellungssensor (20) konfiguriert ist, um ein bestimmtes Signal zu erzeugen, wenn die Drosselstellung an einer Seite einer vorbestimmten Grenzdrosselstellung in einem Drosselstellungsbereich zwischen einer vollständig offenen Drosselstellung und einer vollständig geschlossenen Drosselstellung ist;
das Steuermittel (51) betreibbar ist, um die Zündzeit auf der Basis der ersten oder zweiten Charakteristik (A oder B) in Abhängigkeit davon zu steuern/zu regeln, ob das bestimmte Signal gegeben wird oder nicht;
eine Steuerbahn (29) an der Seitenwand (6a) des Schieberdrosselventils (6) ausgebildet ist;
der Drosselstellungssensor (20) an der Außenoberfläche der Seitenwand (5a) des Drosselführungszylinders (5) angebracht ist und einen Mikroschalter (40) enthält, der ein bewegliches Element (45) aufweist,
welches zur Erzeugung des bestimmten Signals bewegt wird;
der Drosselstellungssensor (20) ferner ein bewegungsübertragendes stangenförmiges Element (22, 44) enthält, das den Drosselführungszylinder (5) durchsetzt, wobei das bewegungsübertragende stangenförmige Element (22, 44) ein Ende in Kontakt mit der Steuerbahn (29) und das andere Ende in Kontakt mit dem beweglichen Element (45) aufweist, derart, dass die Steuerbahn (29) den Kontaktzustand des bewegungsübertragenden stangenförmigen Elements (22, 24) mit dem Schieberdrosselventil (6) steuert, derart, dass das bewegungsübertragende stangenförmige Element (22, 44) das bewegliche Element (45) gemäß der Bewegung des Schieberdrosselventils (6) bewegt.

2. Die Zündsteuervorrichtung für einen Verbrennungsmotor nach Anspruch 1, worin der Mikroschalter (40) einen stationären Kontakt (47), einen beweglichen Kontakt (46) und das bewegliche Element (45) aufweist, das betreibbar ist, um in Abhängigkeit von der Drosselstellung in Bezug auf die vorbestimmte Grenzdrosselstellung den stationären Kontakt (47) und den beweglichen Kontakt (46) zu verbinden, oder den beweglichen Kontakt (46) von dem stationären Kontakt (47) zu trennen.

3. Die Zündsteuervorrichtung für einen Verbrennungsmotor nach Anspruch 1, worin das bewegliche Element (45) ein Schnappwirkungselement ist.

4. Die Zündsteuervorrichtung für einen Verbrennungsmotor nach Anspruch 1, worin das bewegungsübertragende stangenförmige Element (22, 44) an einem Mittelteil einer Membran (28) angebracht ist, deren Umfangsteil an einem Gehäuse (23, 24) angebracht ist, welches das bewegungsübertragende stangenförmige Element (22, 44) enthält.

5. Die Zündsteuervorrichtung für einen Verbrennungsmotor nach Anspruch 4, worin das Gehäuse (23, 24) aus einem ersten Gehäuse (23) und einem mit dem ersten Gehäuse (23) verbundenen zweiten Gehäuse (24) besteht, wobei das Umfangsteil der Membran (28) zwischen den ersten und zweiten Gehäusen (23, 24) gehalten wird, wobei das erste Gehäuse (23) mit dem Drosselführungszylinder (5) verbunden ist, und der Mikroschalter (40) in Bezug auf die Membran (28) an der Seite des zweiten Gehäuses (24) angeordnet ist.

6. Die Zündsteuervorrichtung für einen Verbrennungsmotor nach Anspruch 5, worin das erste Gehäuse (23) einstückig mit dem Drosselführungszylinder (5) ausgebildet ist.

7. Die Zündsteuervorrichtung nach Anspruch 1, worin die Steuerbahn (29) eine Steuernut (29) enthält, die in der Außenoberfläche der Seitenwand (6a) des Schieberdrosselventils (6) parallel zur Länge des Schieberdrosselventils (6) ausgebildet ist.

8. Die Zündsteuervorrichtung für einen Verbrennungsmotor nach Anspruch 1, worin die erste Charakteristik (A) so ausgestaltet ist, dass sie die Zündzeit weiter vorverlagert als die zweite Charakteristik (B), wenn die Drosselöffnung des Vergasers (1) nicht kleiner als eine vorbestimmte Drosselöffnung ist.

## Revendications

1. Régulateur d'allumage pour un moteur à combustion interne pourvu d'un carburateur du type à tiroir (1) comprenant un corps principal (2) définissant un passage d'admission (4) et comportant un cylindre de guidage de papillon (5) comportant une paroi latérale (5a), et un papillon des gaz coulissant (6) monté dans le cylindre de guidage de papillon (5) de manière à coulisser dans le cylindre de guidage de papillon (5) à travers le passage d'admission (4) et relié directement à un câble de commande d'accélération (8), dans lequel ledit régulateur d'allumage comprend un capteur de position de papillon (20) pour détecter la position du papillon des gaz coulissant (6), et des moyens de commande (51) qui commandent le calage de l'allumage sur la base de la position de papillon détectée selon une caractéristique de calage de l'allumage prédéterminée ;
**caractérisé en ce que** :
la caractéristique de calage de l'allumage consiste en des première et deuxième caractéristiques (A et B), le capteur de position de papillon (20) est configuré pour générer un signal spécifique lorsque la position du papillon est d'un côté d'une position de papillon de frontière prédéterminée dans une plage de position de papillon entre une position de papillon totalement ouvert et une position de papillon totalement fermé ;
les moyens de commande (51) peuvent être utilisés pour commander le calage de l'allumage sur la base de la première ou de la deuxième caractéristique (A ou B) selon que le signal spécifique est donné ou non ;
une came (29) est formée sur la paroi latérale (6a) du papillon des gaz coulissant (6) ;
le capteur de position de papillon (20) est fixé à la surface extérieure de la paroi latérale (5a) du cylindre de guidage de papillon (5) et comprend un micro-commutateur (40) comportant un élément mobile (45) qui est déplacé pour générer ledit signal spécifique ;
le capteur de position de papillon (20) comprend en outre un élément en forme de tige de transmission de mouvement (22, 44) pénétrant dans le cylindre de guidage de papillon (5), ledit élément en forme de tige de transmission de mouvement (22, 44) ayant une extrémité en contact avec la came (29) et l'autre extrémité en contact avec l'élément mobile (45) de telle manière que la came (29) commande la condition de contact de l'élément en forme de tige de transmission de mouvement (22, 44) avec le papillon des gaz coulissant (6) de sorte que l'élément en forme de tige de transmission de mouvement (22, 44) déplace l'élément mobile (45) conformément au mouvement du papillon des gaz coulissant (6).

2. Régulateur d'allumage pour un moteur à combustion interne selon la revendication 1, dans lequel le micro-commutateur (40) comporte un contact fixe (47), un contact mobile (46), et l'élément mobile (45) pouvant être utilisé pour connecter le contact fixe (47) et le contact mobile (46) ou pour déconnecter le contact mobile (46) du contact fixe (47) en fonction de la position du papillon par rapport à la position de papillon de frontière prédéterminée.

3. Régulateur d'allumage pour un moteur à combustion interne selon la revendication 1, dans lequel l'élément mobile (45) est un élément à déclic.

4. Régulateur d'allumage pour un moteur à combustion interne selon la revendication 1, dans lequel l'élément en forme de tige de transmission de mouvement (22, 44) est fixé à une partie centrale d'une membrane (28) ayant une partie périphérique de celle-ci fixée à un carter (23, 24) contenant l'élément en forme de tige de transmission de mouvement (22, 44).

5. Régulateur d'allumage pour un moteur à combustion interne selon la revendication 4, dans lequel le carter (23, 24) consiste en un premier carter (23) et un deuxième carter (24) joint au premier carter (23), la partie périphérique de la membrane (28) est maintenue entre les premier et deuxième carters (23, 24), le premier carter (23) est joint au cylindre de guidage de papillon (5), et le micro-commutateur (40) est disposé du côté du deuxième carter (24) par rapport à la membrane (28).

6. Régulateur d'allumage pour un moteur à combustion interne selon la revendication 5, dans lequel le premier carter (23) est formé d'un seul tenant avec le cylindre de guidage de papillon (5).

7. Régulateur d'allumage selon la revendication 1, dans lequel la came (29) comprend une rainure de came (29) formée dans la surface extérieure de la paroi latérale (6a) du papillon des gaz coulissant (6) parallèlement à la longueur du papillon des gaz coulissant (6).

8. Régulateur d'allumage pour un moteur à combustion interne selon la revendication 1, dans lequel la première caractéristique (A) est conçue pour avancer le calage de l'allumage davantage que ne le fait la deuxième caractéristique (B), lorsque l'ouverture de papillon du carburateur (1) n'est pas inférieure à une ouverture de papillon prédéterminée.
